# EUROPÄISCHE PATENTSCHRIFT

(11) **EP 0 367 756 B1**
(45) Veröffentlichungstag und Bekanntmachung des Hinweises auf die Patenterteilung: **15.12.1993**
(21) Anmeldenummer: 89890291.1
(22) Anmeldetag: 02.11.1989
(51) Int. Cl.: C02F 3/30, C02F 3/22

(54) **Verfahren zur Denitrifikation von Flüssigkeiten und Vorrichtung zur Durchführung dieses Verfahrens**
Process and apparatus for the denitrification of liquids
Procédé et dispositif de dénitrification de liquides

(30) Priorität: 03.11.1988 AT 2709/88
(43) Veröffentlichungstag der Anmeldung: 09.05.1990
(73) Patentinhaber: AUSTRIAN ENERGY & ENVIRONMENT SGP/WAAGNER-BIRO GmbH, A-1210 Wien (AT)
(72) Erfinder: Kroiss, Helmut, Prof. Dr.-Ing., A-1160 Wien (AT); Kornel, Jahn, Dipl.-Ing., A-1040 Wien (AT)
(74) Vertreter: Wallner, Gerhard, Dipl.-Ing.

(56) Entgegenhaltungen:
- EP-A- 0 162 831
- EP-A- 0 247 212
- CH-A- 573 768

## Beschreibung

Die Erfindung bezieht sich auf ein Verfahren zur Denitrifikation von Flüssigkeiten bei der biologischen Abwasserreinigung in einem turmförmigen Behälter mit einem in Abstand von der Behälterinnenwand angeordneten Mantelrohr, dessen obere, offene Stirnfläche unterhalb des Flüssigkeitsspiegels und dessen untere, offene Stirnfläche in Abstand vom Boden des Behälters angeordnet ist, welcher Behälter durch in Bodennähe angeordnete Düsen, deren Gasaustritt in den Ringraum zwischen Mantelrohr und Behälterinnenwand oder den zentralen Raum des Mantelrohres gerichtet ist, begast wird, wobei das Rohabwasser mit Belebtschlamm vermischt wird, sowie auf eine Vorrichtung zur Durchführung dieses Verfahrens.

Ein Verfahren der eingangs genannten Art ist beispielsweise der EP-OS 162 831 zu entnehmen. Neben Kohlenstoffverbindungen sind mengenmäßig in den meisten Fällen Stickstoffverbindungen die häufigste Belastungskomponente von Abwässern. Aus der eingangs genannten EP-OS 162 831 ist bereits ein Verfahren zur simultanen Nitrifikation und Denitrifikation bei der Umsetzung von Biomasse bekanntgeworden. Mit simultanen Denitrifikationsverfahren gelingt es, außer der Elimination von diversen Stickstoffverbindungen auch erhebliche Mengen an sogenannter Belüftungsenergie rückzugewinnen, und es gelingt weiter, die Gefahr der Schwimmschlammbildung in Nachklärbecken zu reduzieren. Um die gewünschte biologische Entfernung von Stickstoffverbindungen zu erzielen, muß aber nun zuerst in einem ersten Verfahrensabschnitt die Umsetzung von Stickstoff-Wasserstoffverbindungen mit Sauerstoff zu Stickstoff-Sauerstoffverbindungen in aerobem Milieu erfolgen. Die bei dieser Erstumsetzung gebildeten Nitrate bzw. Nitrite können anschließend unter anaeroben Bedingungen denitrifiziert werden. Aus der eingangs genannten EP-OS ist eine Einrichtung bekanntgeworden, welche bei geringem Flächenbedarf sowohl die Nitrifikation als auch die Denitrifikation derartiger Abwässer ermöglicht, wobei der für die aerobe Umsetzung erforderliche Sauerstoff gleichzeitig zur Erzielung einer entsprechenden Umlaufströmung Verwendung findet. Die Zuführung von Sauerstoff und/oder Luft erfolgt hiebei in einem Ringraum, welcher eine oxische Zone ausbildet, und die nachfolgend unter anaeroben Bedingungen durchzuführende Denitrifikation kann in dem von einer Luft- bzw. Sauerstoffbedüsung freigehaltenen zweiten Raum unter anoxischen Bedingungen durchgeführt werden. Bei den bekannten Einrichtungen ist die Strömungsgeschwindigkeit und damit die Verweilzeit in der jeweiligen Phase der Nitrifikation bzw. Denitrifikation unmittelbar vom Gasstrom abhängig.

Die Erfindung zielt nun darauf ab, ein Verfahren der eingangs genannten Art dahingehend weiterzubilden, daß das Verfahren leichter an unterschiedliche Belastungen, insbesondere an unterschiedliche Stickstoffkonzentrationen angepaßt werden kann. Es soll somit die Durchsatzmenge bei entsprechend geringerer Belastung erhöht werden können und umgekehrt bei relativ kleinen Abmessungen der Vorrichtungen jeweils die maximale Durchsatzmenge bzw. -leistung erzielt werden, wobei gleichzeitig sichergestellt werden soll, daß im Bereich der Nitrifikation der eingebrachte Sauerstoff tatsächlich verbraucht ist, um in der Denitrifikation anaerobe Bedingungen zu erzielen. Zur Lösung dieser Aufgabe besteht das erfindungsgemäße Verfahren im wesentlichen darin, daß die Überströmhöhe zwischen der Oberkante des Mantelrohres und dem Flüssigkeitsspiegel und/oder die Unterströmhöhe zwischen der Unterkante des Mantelrohres und dem Boden des Behälters und die Strömungsgeschwindigkeit in Abhängigkeit von wenigstens einem der nachfolgenden Prozeßparameter der O₂-, der NH₄⁺- und/oder der NOₓ-Konzentration, geregelt wird. Dadurch, daß während des Verfahrens Prozeßparameter, wie beispielsweise die Sauerstoff- und die Ammoniumionen- und/oder die Stickoxid-Konzentration gemessen wird, läßt sich durch Auswertung dieser Meßwerte die Verfahrensführung dahingehend am leichtesten an die jeweilige Belastung anpassen, daß die Überströmhöhe zwischen der Oberkante des Mantelrohres und dem Flüssigkeitsspiegel und/oder die Unterströmhöhe zwischen der Unterkante des Mantelrohres und dem Boden des Behälters verändert wird. Eine entsprechende Anhebung der Unterströmhöhe bzw. Absenkung der Unterströmhöhe stellt hiebei sicher, daß beim Übergang zwischen der auf Grund der Luft- oder Sauerstoffbegasung oxischen Zone in die im Inneren des Mantelrohres einzustellenden anaeroben Bedingungen tatsächlich der Sauerstoff weitgehend verbraucht ist, und bei entsprechendem Minderverbrauch kann durch Anhebung dieser Überströmhöhe bzw. Unterströmhöhe sichergestellt werden, daß im inneren Bereich tatsächlich anoxische bzw. anaerobe Bedingungen für die Denitrifikation aufrechterhalten werden. Es kann somit durch Änderung der Über- bzw. Unterströmhöhe der Mengenstrom unabhängig von der Luftmenge geregelt werden. Umgekehrt kann durch Einflußnahme auf die Strömungsgeschwindigkeit gleichfalls sichergestellt werden, daß der zur Verfügung gestellte Sauerstoff, welcher mit der Begasung eingetragen wurde, innerhalb des hiefür vorgesehenen Bereiches tatsächlich vollständig verbraucht wird. Es kann somit mit einfachen Mitteln die Verweilzeit des Flüssigkeitsstromes in den jeweiligen Behandlungszonen der Belastung entsprechend verändert werden. Die belastungsabhängige Änderung des Volumsstroms in den oxisch bzw. anoxisch zu betreibenden Zonen ermöglicht es, den Raumbedarf für die Einrichtung zur Aufbereitung der Flüssigkeiten gering zu halten und demnach die Kosten zu senken.

Die Reinigungsleistung und der Energiebedarf von derartigen Belebungsverfahren bei gleichzeitiger simultaner Denitrifikation ist in hohem Maße von der Art der Sauerstoffzuführung beeinflußt, da der Stoffumsatz in den einzelnen Reaktionszonen über das jeweilige Sauerstoffangebot geregelt werden kann. Bei simultaner Denitrifikation ist eine genaue Anpassung des Sauerstoffangebotes an den Bedarf erforderlich, insbesondere die Veränderlichkeit der Überströmhöhe und/oder der Unterströmhöhe ermöglicht eine derartige Regelung des Volumsstromes auch bei vertikal bauenden Einrichtungen und damit bei Einrichtungen mit relativ geringem Flächenbedarf.

Die erfindungsgemäße Vorrichtung zur Durchführung dieses Verfahrens geht von einer vorbekannten Ausbildung der Einrichtung mit einem turmförmigen Behälter mit einem in Abstand von der Behälterinnenwand angeordneten Mantelrohr, dessen obere, offene Stirnfläche unterhalb des Flüssigkeitsspiegels und dessen untere, offene Stirnfläche in Abstand vom Boden des Behälters angeordnet ist, welcher Behälter durch in Bodennähe angeordnete Düsen, deren Gasaustritt in den Ringraum zwischen Mantelrohr und Behälterinnenwand oder den zentralen Raum des Mantelrohres gerichtet ist, begast wird und eine Mischung aus Rohabwasser und Belebtschlamm mittels einer Pumpe in den Ringraum ausgebracht wird, aus und ist im wesentlichen dadurch gekennzeichnet, daß konzentrisch zum Mantelrohr wenigstens ein Ring in Höhenrichtung verschiebbar gelagert ist, dessen Innen- oder Außendurchmesser im wesentlichen dem Außen- oder Innendurchmesser des Mantelrohres entspricht und weitgehend dichtend am Mantelrohr teleskopisch in Lagen verschiebbar ist, bei welchen die Oberkante des Ringes unterhalb des Flüssigkeitsspiegels im Behälter verbleibt und/oder ein einstellbarer Abstand zum Boden des Behälters verbleibt, und daß wenigstens ein Verschiebeantrieb für den (die) verschiebbaren Ring(e) über Steuerleitungen mit Einrichtungen zur Ermittlung von Prozeßparametern verbunden ist. Dadurch, daß konzentrisch zum Mantelrohr wenigstens ein Ring in Höhenrichtung verschiebbar gelagert ist, läßt sich in besonders einfacher Weise die Überströmhöhe und/oder die Unterströmhöhe und damit die Verweilzeit der zu behandelnden Flüssigkeit in den oxischen bzw. anoxischen Zonen bei vorgegebener Strömungsgeschwindigkeit einstellen. Eine gleichzeitige Veränderung der Strömungsgeschwindigkeit hat selbstverständlich gleichfalls einen Einfluß auf die Vollständigkeit der gewünschten Umsetzung, wobei jedoch die baulich besonders einfache Anordnung wenigstens eines konzentrisch zum Mantelrohr verschieblichen Ringes in konstruktiv besonders einfacher Weise die gewünschte Einstellbarkeit gewährleistet. In besonders einfacher Weise kann ein derartiger höhenverschieblicher Ring bzw. können derartige höhenverschiebliche Ringe über Umlenkrollen und Seile an einem zentralen Zulaufbauteil abgestützt sein, so daß auch für den Antrieb und die Höhenverstellung eines derartigen Ringes bzw. derartiger Ringe einfache und betriebssichere Bauteile Verwendung finden können.

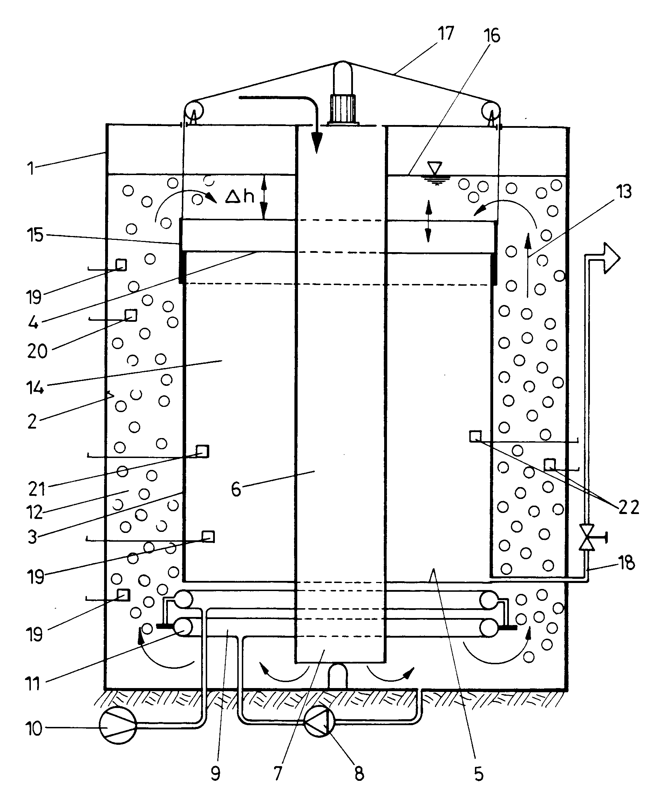

Die Erfindung wird nachfolgend an Hand eines in der Zeichnung schematisch dargestellten Ausführungsbeispieles näher erläutert.

In diesem ist mit 1 ein im wesentlichen zylindrischer, turmförmiger Behälter bezeichnet, in welchem sich ein in Abstand von der Behälterinnenwand 2 angeordnetes Mantelrohr 3 befindet. Sowohl die obere, offene Stirnfläche 4 des Mantelrohres als auch die untere, offene Stirnfläche 5 des Mantelrohres sind in Abstand von den jeweiligen oberen und unteren Stirnflächen des turmförmigen Behälters angeordnet. Dem Belebungsreaktor wird über einen zentralen Zulauf 6 das Rohabwasser zugeführt. Um eine effektive Nitrifikation zu erreichen, wird das durch den Zulauf 6 eingebrachte Rohabwasser in Bodennähe 7 des Reaktors mit dem Belebtschlamm vermischt, wobei dieses Gemisch über eine Pumpe 8 in eine neutrale Ringleitung 9 eingebracht wird, in welcher die Biomasse mit über den Kompressor 10 verdichteter Luft vermischt wird, wonach dieses Gemisch über die Belüftungseinrichtung 11 in den äußeren Ringraum 12 des turmförmigen Reaktors eingebracht wird. In dem äußeren Ringraum 12 des Reaktors findet die sogenannte Nitrifikation statt, indem das Rohabwasser zusammen mit Sauerstoff in Richtung des Pfeiles nach oben steigt und über die sich in Abstand der Oberkante des turmförmigen Behälters befindliche Oberkante des Mantelrohres in den zentralen Ringraum 14 des Mantelrohres einströmt, in welchem die Denitrifikation stattfindet. Um die Verweilzeit des Abwassers im äußeren Ringraum 12 einstellen zu können, und um eine effektive Nitrifikation sicherzustellen, ist konzentrisch zum inneren Mantelrohr 3 mindestens ein Ring 15 in Höhenrichtung verschiebbar gelagert. Die erforderliche Überströmhöhe Δh kann daher entweder durch die in Höhenrichtung verstellbaren Ringe 15 oder durch Veränderung des Füllstandes 16 reguliert werden. Die Verschiebung des Ringes 15 kann hiebei über den schematisch mit 17 angedeuteten Seilzug oder durch eine elektromechanische Verstellung erfolgen.

Das die Nitrifikationsstufe im äußeren Ringraum 12 und die Denitrifikation im inneren Ringraum 14 des Belebungsreaktors durchlaufende Rohabwasser wird nach Beendigung des Verfahrens über die schematisch mit 18 dargestellte flexible, in Höhenrichtung verschiebliche Leitung zu einem, in der Zeichnung nicht dargestellten, Nachklärbecken geleitet.

Zur Messung der Prozeßparameter, wie der O₂-, NH₄⁺-, der NOₓ-Konzentration und der Strömungsgeschwindigkeit, sind sowohl im äußeren 12 als auch im inneren Ringraum 14 Meßfühler angebracht. Diese Meßfühler sind in der gezeigten Zeichnung schematisch dargestellt, wobei die Meßfühler zur Messung der Sauerstoffkonzentration mit 19, diejenigen zur Messung der NH₄⁺--Konzentration mit 20, die für die NOₓ-Konzentration mit 21, sowie der zur Messung der Strömungsgeschwindigkeit mit 22 dargestellt sind.

Eine zusätzliche Möglichkeit der Veränderung der Strömungsgeschwindigkeit ergibt sich durch Anheben oder Absenken eines Ringes mittels Verschiebeantrieb im Bereich der Unterkante des inneren Mantelrohres 3.

## Patentansprüche

1. Verfahren zur Denitrifikation von Flüssigkeiten bei der biologischen Abwasserreinigung in einem turmförmigen Behälter (1) mit einem in Abstand von der Behälterinnenwand (2) angeordneten Mantelrohr (3), dessen obere, offene Stirnfläche (4) unterhalb des Flüssigkeitsspiegels (16) und dessen untere, offene Stirnfläche (5) in Abstand vom Boden des Behälters (1) angeordnet ist, welcher Behälter (1) durch in Bodennähe angeordnete Düsen (11), deren Austritt in den Ringraum (12) zwischen Mantelrohr (3) und Behälterinnenwand (2) oder den zentralen Raum (14) des Mantelrohres (3) gerichtet ist, begast wird, wobei das Rohabwasser mit Belebtschlamm vermischt wird, dadurch gekennzeichnet, daß die Überströmhöhe zwischen der Oberkante des Mantelrohres (3) und dem Flüssigkeitsspiegel (16) und/oder die Unterströmhöhe zwischen der Unterkante des Mantelrohres (3) und dem Boden des Behälters (1) und die Strömungsgeschwindigkeit in Abhängigkeit von wenigstens einem der nachfolgenden Prozeßparameter, der O₂-, der NH₄- und/oder der NOₓ-Konzentration geregelt werden.

2. Vorrichtung zur Durchführung des Verfahrens nach Anspruch 1 mit einem turmförmigen Behälter (1) mit einem in Abstand von der Behälterinnenwand (2) angeordneten Mantelrohr (3), dessen obere, offene Stirnfläche (4) unterhalb des Flüssigkeitsspiegels (16) und dessen untere, offene Stirnfläche (5) in Abstand vom Boden des Behälters (1) angeordnet ist, welcher Behälter (1) durch in Bodennähe angeordnete Düsen (11), deren Austritt in den Ringraum (12) zwischen Mantelrohr (3) und Behälterinnenwand (2) oder den zentralen Raum (14) des Mantelrohres (3) gerichtet ist, begast wird, und eine Mischung aus Rohabwasser und Belebtschlamm mittels einer Pumpe (8) in den Ringraum (12) ausgebracht wird, dadurch gekennzeichnet, daß konzentrisch zum Mantelrohr (3) wenigstens ein Ring (15) in Höhenrichtung verschiebbar gelagert ist, dessen Innen- und Außendurchmesser im wesentlichen dem Außen- oder Innendurchmesser des Mantelrohres (3) entspricht und weitgehend dichtend am Mantelrohr (3) teleskopisch in Lagen verschiebbar ist, bei welchen die Oberkante des Ringes unterhalb des Flüssigkeitsspiegels (16) im Behälter (1) verbleibt und/oder ein einstellbarer Abstand zum Boden des Behälters (1) verbleibt, und daß wenigstens ein Verschiebeantrieb für den (die) verschiebbaren Ring(e) über Steuerleitungen mit Einrichtungen zur Ermittlung von Prozeßparametern verbunden ist.

3. Vorrichtung nach Anspruch 2, dadurch gekennzeichnet, daß der (die) höhenverschiebliche(n) Ring(e) (15) über Umlenkrollen und Seile (17) an einem zentralen Zulaufbauteil (6) abgestützt ist (sind).

## Claims

1. Method for the denitrification of liquids in biological wastewater purification using a tower-shaped tank (1) with a sheathed tube (3) placed at a distance from the tank inside wall (2), the top open end face (4) of the sheathed tube (3) being located und er the surface of the liquid (16) and its bottom open end face (5) at a distance from the bottom of the tank (1) which is gassed by means of nozzles (11) located close to the bottom, the openings of the nozzles pointing into the annular space (12) between the sheathed tube (3) and the tank inside wall (2) or into the central space (14) of the sheathed tube (3), the raw wastewater being mixed with activated sludge, this method being characterized by the fact that the overflow height between the top edge of the sheathed tube (3) and the surface of the liquid (16) and/or the underflow height between the bottom edge of the sheathed tube (3) and the tank (1) bottom, as well as the flow rate are controlled depending on at least one of the following process parameters, i.e. O2-, NH4- and/or NOx-concentration.

2. Device for the implementation of the method defined by claim 1 using a tower-shaped tank (1) with a sheathed tube (3) placed at a distance from the tank inside wall (2), the top end face (4) of the sheathed tube (3) being located under the surface of the liquid (16) and its bottom open end face (5) at a distance from the bottom of the tank (1) which is gassed by means of nozzles (11) located close to the bottom, the openings of the nozzles pointing into the annular space (12) between the sheathed tube (3) and the tank inside wall (2) or into the central space (14) of the sheathed tube (3), a mixture of raw wastewater and activated sludge being conveyed into the annular space (14) by means of a pump (8), this device being characterized by the fact that concentrically to the sheathed tube (3) at least one ring (15) is installed which can move vertically, and whose inside and outside diameters are essentially the same as the inside and outside diameters of the sheathed tube, and which can telescope largely tightly along the sheathed tube (3) into positions in which the top edge of the ring remains under the surface of the liquid (16) in the tank (1), and/or in which an adjustable distance remains to the bottom of the tank (1), and characterized by the fact that at least one position drive for the sliding ring(s) is connected via control lines with equipment designed to determine process parameters.

3. Device according to claim 2, characterized by the fact that the vertically adjustable ring(s) (15) is (are) supported, via deflection pulleys and ropes (17), by a central intake structure (6).

## Revendications

1. Procédé de dénitrification de liquides dans l'épuration biologique des eaux usées réalisé dans un réservoir (1) en forme de tour ayant un tube enrobé (3) disposé à une distance de la paroi intérieure (2) du réservoir, la face ouverte supérieure (4) du tube se trouvant au-dessous du niveau du liquide (16) et sa face ouverte inférieure (5) à une distance du fond du réservoir (1) dans lequel du gaz est injecté au moyen de tuyères (11) disposées à proximité du fond, l'orifice de ces tuyères débouchant dans l'espace annulaire (12) entre le tube enrobé (3) et la paroi intérieure (2) du réservoir ou dans l'espace central (14) du tube enrobé (3), l'eau usée brute étant mélangée avec la boue activée, ce procédé étant caractérisé par le fait que la hauteur d'écoulement entre le bord supérieur du tube enrobé (3) et le niveau du liquide (16) et/ou la hauteur d'écoulement entre le bord inférieur du tube enrobé (3) et le fond du réservoir (1) ainsi que la vitesse d'écoulement sont réglées en fonction d'au moins un des paramètres de processus suivants, à savoir la concentration en O2, en NH4 et/ou en NOx.

2. Dispositif pour la mise en oeuvre du procédé suivant la revendication 1 réalisé dans un réservoir (1) en forme de tour ayant un tube enrobé (3) disposé à une distance de la paroi intérieure (2) du réservoir, la face ouverte supérieure (4) du tube se trouvant au-dessous du niveau du liquide (16) et sa face ouverte inférieure (5) à une distance du fond du réservoir (1) dans lequel du gaz est injecté au moyen de tuyères (11) disposées à proximité du fond, l'orifice de ces tuyères débouchant dans l'espace annulaire (12) entre le tube enrobé (3) et la paroi intérieure (2) du réservoir ou dans l'espace central (14) du tube enrobé (3), un mélange d'eau usée brute et de boue activée étant refoulé dans l'espace annulaire (12) au moyen d'une pompe (8), ce dispositif étant caractérisé par le fait que concentriquement au tube enrobé (3) au moins un anneau (15) est installé de manière à pouvoir se déplacer dans le sens de la hauteur, les diamètres intérieur et extérieur correspondant pour l'essentiel aux diamètres extérieur ou intérieur du tube enrobé (3), cet anneau pouvant se déplacer télescopiquement de manière largement étanche le long du tube enrobé vers des positions dans lesquelles le bord supérieur de l'anneau reste au-dessous du niveau du liquide (16) dans le réservoir (1) et/ou dans lesquelles il reste une distance réglable par rapport au fond du réservoir (1), et caractérisé par le fait qu'au moins un entraînement de positionnement pour le (les) anneau(x) coulissant(s) est relié par des lignes de commande avec des équipements destinés à déterminer les paramètres de processus.

3. Dispositif suivant la revendication 2, caractéristé par le fait que le(s) anneau(x) (15) coulissant dans le sens de la hauteur s'appuie(nt) sur une construction centrale d'arrivée (6), par l'intermédiaire de poulies de renvoi et de câbles (17).
